# EUROPÄISCHE PATENTSCHRIFT

(11) **EP 1 437 283 B1**
(45) Veröffentlichungstag und Bekanntmachung des Hinweises auf die Patenterteilung: **10.10.2007**
(21) Anmeldenummer: 03000752.0
(22) Anmeldetag: 13.01.2003
(51) Int. Cl.: B62B 3/10, B62B 3/00

(54) **Transportwagen für Gegenstände, insbesondere Reinigungsutensilien**
Trolley, in particular for transporting cleaning articles
Chariot de transport, en particulier pour des ustensiles de nettoyage

(43) Veröffentlichungstag der Anmeldung: 14.07.2004
(73) Patentinhaber: VERMOP SALMON GMBH, D-97877 Wertheim (DE)
(72) Erfinder: Salmon, Dirk, 97877 Wertheim (DE)
(74) Vertreter: HOFFMANN EITLE

(56) Entgegenhaltungen:
- EP-A- 0 878 374
- DE-A- 10 010 852
- US-A- 4 869 518

## Beschreibung

Die vorliegende Erfindung betrifft einen Transportwagen für Gegenstände, insbesondere Reinigungsutensilien, mit den Merkmalen des Oberbegriffs des Anspruchs 1.

Transportwägen sind in den verschiedensten Ausführungsformen seit langem bekannt.

Die von den Rädern getragenen Plattformen, meist in Form von Gitter- oder Rahmenstrukturen, dienen bei diesen bekannten Konstruktionen in der Hauptsache zur Aufnahme der schweren Reinigungsutensilien, wie Eimern mit Reinigungsflüssigkeit, Pressen o.dgl., während das jeweils auf der Plattform aufgebaute Gestell über spezielle Halterungen die übrigen, für den jeweiligen Reinigungseinsatz notwendigen Gerätschaften und Utensilien abnehmbar aufnimmt.

Da in Abhängigkeit des Einsatzzweckes und der Reinigungsaufgabe die benötigten Gerätschaften und Utensilien sehr unterschiedlich sind, ist es bereits bekannt, das Gestell nach Art eines Baukastensystems variabel zu gestalten. Auf diese Weise können unterschiedliche Gestelle oder Gestellteile mit der Plattform kombiniert und auch verschiedene Halterungen an dem Gestell angebracht werden.

Der aus der US 4,869,518 bekannte Transportwagen für Reinigungsutensilien weist zwei Räder an einer Plattform auf, die fest mit einem Gestellt verbunden ist, an dem sich Halterungen für Reinigungsutensilien sowie einen Abfallbeutel befinden. Am Gestell befindet sich mindestens eine in vertikaler Richtung verschiebbare Plattform. Eine weitergehende Variabilität in Bezug auf die Anordnung des Gestells ist nicht vorhanden.

Aus der EP 0 878 374 A2 ist ein Transportwagen für Reinigungsgegenstände bekannt mit einer auf vier Rädern getragenen Plattform sowie einem auf der Plattform aufgebauten Gestell dessen vertikale Stützen aus Vierkantrohr in vorgegebene Aufnahmefüße im Transportwagen eingeschoben werden. Die vier oder sechs vertikalen Stützen des auf der Plattform befestigten Gestells tragen weitere Plattformen oder Reinigungsgegenstände, wobei diese über eine spezielle Klippkonstruktion in übereinander angeordnete Befestigungslöcher einrastbar sind. Die EP 0 878 374 A2 stellt den nächstkommenden Stand der Technik dar.

Aufgabe der vorliegenden Erfindung ist es, ausgehend von einer Transportwagenkonstruktion der eingangs geschilderten Art, deren Variabilität und Anpassbarkeit an den jeweils gewünschten Einsatzzweck bei technisch einfachem Aufbau weiter zu verbessern.

Diese Aufgabe wird erfindungsgemäß durch einen Transportwagen mit den Merkmalen des Anspruchs 1 gelöst. Bevorzugte Ausführungsformen folgen aus den übrigen Ansprüchen.

Durch die erfindungsgemäße Merkmalskombination wird mit überraschend geringem zusätzlichen Aufwand eine erhebliche Verbesserung in bezug auf die Variabilität erreicht. So ermöglichen die im Raster angeordneten Befestigungseinrichtungen eine beliebige Anordnung der Stützen und damit eine vielfältige, auf den jeweiligen Anwendungszweck genau zugeschnittene Gestaltung des Gestells.

Die Raster-Anordnung der ersten Rastmittel an den Stützen in Verbindung mit den formschlüssig zusammenwirkenden zweiten Rastmitteln an den Halterungen ermöglicht darüber hinaus ohne Austausch oder zusätzliche Klammern oder Adapter eine zuverlässige Anordnung und Befestigung weiterer Plattformen, Gerätschaften und Utensilien in praktisch jeder beliebigen Höhe und Kombination.

Dem jeweiligen Anwendungszweck entsprechend können die Halterungen in der verschiedensten Weise ausgestaltet sein, wobei die Halterungen als Klammerelemente ausgebildet sind, die die Stützen umgreifen. Je nach Ausgestaltung können die Klammerelemente ein- oder mehrteilig ausgebildet sein. Sie können Klemmelemente in Form von Klemmkeilen aufweisen, die eine besonders gute Verbindung gewährleisten.

Die Klammerelemente können im übrigen als Einzelelemente ausgebildet oder auch in die Plattform- oder Rahmenelemente integriert sein.

Eine gute formschlüssige Verbindung ergibt sich, wenn die Klammerelemente mit zweiten Einrastmitteln ausgestattet sind oder mit diesen zusammenwirken.

Vorteilhafterweise sind die zweiten Einrastmittel in ihrer Formgebung als Gegenstücke zu den ersten Einrastmitteln ausgestaltet.

Grundsätzlich können die Befestigungseinrichtungen in verschiedenster Weise ausgebildet sein. Eine besonders einfache Ausgestaltung ergibt sich, wenn die Befestigungseinrichtungen jeweils als Einsenkungen in der Oberseite der Plattform ausgebildet sind oder eine über die Oberseite der Plattform herausragende kranzartige Form aufweisen, in die die unteren Enden der Stützen einsetzbar sind.

Ein hinsichtlich der Montage besonders einfacher und statisch vorteilhafter Aufbau ergibt sich, wenn die Befestigungseinrichtungen eine Durchgangsöffnung umfassen, durch die von der Unterseite der Plattform her mindestens eine Befestigungsschraube einsetzbar ist, die mit ihrem zur Plattformoberseite hingerichteten Ende jeweils in das untere Ende der Stütze einschraubbar ist. Bei einer derartigen Anordnung ist das untere Ende der Stütze mit einer Buchse ausgestattet, die ein Innengewinde zur Aufnahme der Befestigungsschraube aufweist.

Grundsätzlich muss das ausgewählte Raster auf die Ausgestaltung des Gestells, die eingesetzten weiteren Plattformen sowie auf die Gerätschaften, Utensilien o.dgl. abgestimmt sein. Besonders vorteilhaft ist es jedoch, wenn als Raster ein Gitterraster gewählt wird, dessen Mittelabstände der Befestigungseinrichtungen in Längs- und in Querrichtung der Plattform gleich sind.

Im Bedarfsfall kann sich das Raster über die gesamte Plattform erstrecken. Für bestimmte Anwendungsbereiche kann es jedoch auch zweckmäßig sein, nur auf einem Teil der Fläche der Plattform ein entsprechendes Raster vorzusehen.

Ein statisch besonders stabiler Aufbau ergibt sich, wenn jeweils zwei vertikale Stützen des Gestells im Bereich ihres oberen Endes miteinander verbunden sind. Im Bedarfsfalle können jedoch auch mehr als zwei Stützen zur Verbesserung der Stabilität miteinander verbunden werden.

Grundsätzlich können die Stützen in jeder beliebigen Weise ausgebildet sein. Vorteilhaft ist es jedoch, wenn die vertikalen Stützen von Rohren gebildet werden.

Generell können die ersten Einrastmittel in den Stützen in beliebiger Weise ausgestaltet sein. Eine besonders einfach herstellbare und einen hervorragenden Formschluss ergebende Ausgestaltung wird jedoch erreicht, wenn die ersten Einrastmittel von in einem gleichen Abstand übereinander angeordneten Einsenkungen gebildet werden. Derartige Einsenkungen ermöglichen einen wirkungsvollen Formschluss, bieten wenig Möglichkeiten zum Ansetzen von Schmutzpartikeln und sind leicht zu reinigen, so dass sich eine derartige Ausgestaltung insbesondere für den Klinikbereich eignet.

Anstelle von Einsenkungen können die Stützen zur Bildung der Einrastmittel auch entsprechend gestaltete Vorsprünge aufweisen.

Im folgenden ist zur weiteren Erläuterung und zum besseren Verständnis ein Ausführungsbeispiel des erfindungsgemäßen Transportwagens sowie ein Teil einer Stütze mit Halterung und Klemmkeil unter Bezugnahme auf die beigefügten Zeichnungen näher beschrieben und erläutert.
- Figur 1: zeigt in einer perspektivischen Ansicht ein Ausführungsbeispiel eines Transportwagens, der der besseren Übersicht halber nur teilweise mit Reinigungsutensilien beladen ist,
- Figur 2: zeigt in vergrößertem Maßstab das Detail"A" der Figur 1, und
- Figuren 3a bis 3d: zeigen Details eines zweiten Ausführungsbeispieles.

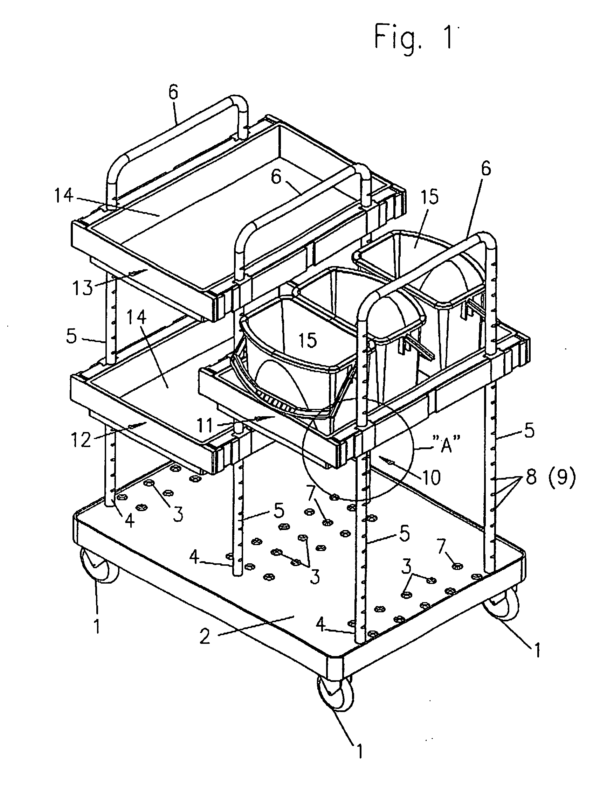

Das in Figur 1 dargestellte Ausführungsbeispiel eines erfindungsgemäßen Transportwagens ist speziell für die Aufnahme von Reinigungsutensilien konzipiert.

Der Transportwagen umfasst eine von insgesamt vier Rädern 1 getragene Plattform 2, die als ebene Platte ausgebildet ist und auf ihrer Oberseite eine Anzahl von in einem bestimmten Raster angeordnete Befestigungseinrichtungen 3 aufweist.

Im vorliegenden Ausführungsbeispiel sind die Befestigungseinrichtungen 3 jeweils als Einsenkungen in der Plattform 2 ausgebildet, in die die unteren Enden 4 von Stützen 5 einsetzbar sind.

Im vorliegenden Ausführungsbeispiel ist der Transportwagen mit insgesamt sechs Stützen 5 ausgestattet, von denen jeweils zwei Stützen im Bereich ihrer oberen Enden über einen Bügel 6 miteinander verbunden sind.

Wie aus Figur 1 erkennbar, sind die Befestigungseinrichtungen 3 jeweils mit einer Durchgangsöffnung 7 ausgestattet, durch die von der Unterseite der Plattform 2 her eine Befestigungsschraube (nicht dargestellt) einsetzbar ist. Die Befestigungsschraube ist dabei mit ihrem zur Plattformoberseite hin gerichteten Ende jeweils in das untere Ende der Stütze eingeschraubt.

Im vorliegenden Ausführungsbeispiel sind die Befestigungseinrichtungen 3 in einem symmetrischen Raster (Gitterraster) auf der Plattform 2 angeordnet. Dies bedeutet, dass die Mittelabstände der Befestigungseinrichtungen 3 sowohl in der Längs- als auch in der Querrichtung der Plattform gleich sind.

Wie aus Figur 1 erkennbar, werden die Stützen 5 von Rohren gebildet, welche in einem bestimmten Raster übereinander angeordnete erste Einrastmittel 8 in Form von Einsenkungen 9 besitzen.

Wie später noch erläutert werden wird, ermöglichen die ersten Einrastmittel 8 in Form von Einsenkungen 9 das formschlüssige Ankoppeln von Halterungen 10 bzw. 20 für weitere Plattformen, Gerätschaften, Utensilien o.dgl..

In dem in Figur 1 dargestellten Ausführungsbeispiel tragen die Halterungen 10 lediglich drei Rahmenanordnungen 11, 12 und 13, welche Wannen 14 oder in beliebiger Weise gestaltete Aufnahmen tragen, auf denen beispielsweise Eimer 15 oder andere Gerätschaften abgestellt werden können.

Wie bereits erwähnt, dienen bei dem in Figur 1 dargestellten Ausführungsbeispiel die Halterungen 10 lediglich zur Befestigung von drei in verschiedenen Ebenen angeordneten Rahmenanordnungen. An den Rahmenanordnungen bzw. anstelle der Rahmenanordnungen können selbstverständlich auch Halterungen für Reinigungsgerätschaften und Reinigungsutensilien jeglicher Art am Gestell angeordnet werden. Aufgrund der in einem Raster angeordneten Einrastmittel sind die Möglichkeiten der Befestigung und der Anordnung äußerst vielfältig.

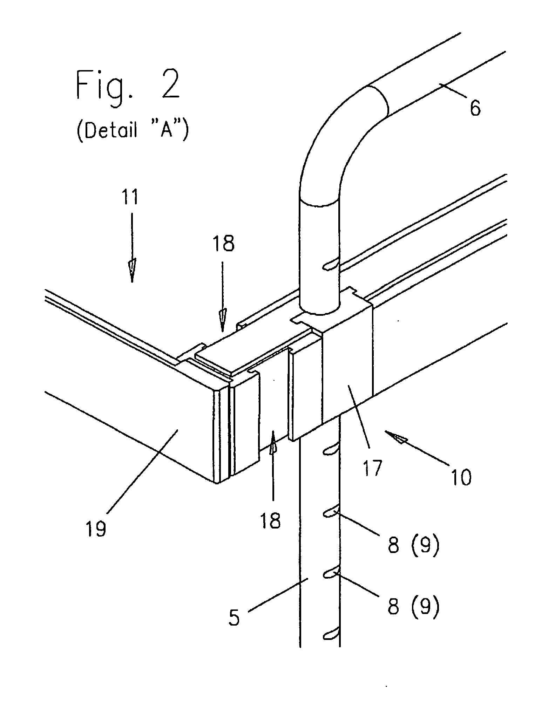

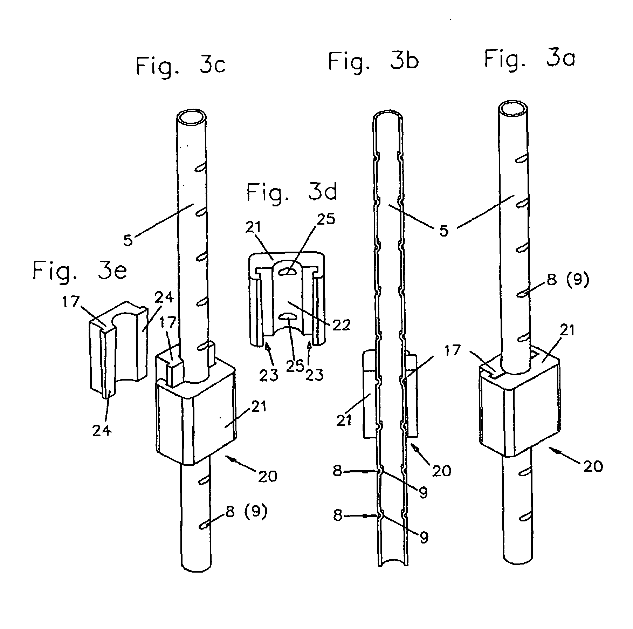

In Figur 2 ist eine in einen Längsträger 16 der Rahmenanordnung 11 integrierte Halterung 10 dargestellt. Der Längsträger 16 besitzt zu diesem Zweck eine im Querschnitt halbkreisförmige Ausnehmung, die dem Durchmesser der Stütze 5 angepasst ist. An die halbkreisförmige Ausnehmung schließt sich eine T-förmige Führungsnut an, wie sich dies auch in Figur 3d im Zusammenhang mit einem weiteren Ausführungsbeispiel ergibt.

In die T-förmige Führungsnut ist ein Klemmkeil 17 eingeschoben, dessen Form aus Figur 3e erkennbar ist. Auf diese Weise wird ein die Stützen vollständig umgreifendes Klammerelement gebildet, welches die jeweilige Stütze 5 vollständig umgibt und eine sichere Halterung gewährleistet.

Wie aus Figur 2 erkennbar, ist der Längsträger mit einer Anzahl weiterer T-förmiger Führungsnuten 18 ausgestattet, die zur Aufnahme weiterer Halterungen für Reinigungsutensilien dienen können.

An den Längsträger 16 schließen sich beidseitig zur Bildung der Rahmenanordnung Querträger 19 an, die im vorliegenden Ausführungsbeispiel ebenfalls über T-förmige Führungsnuten mit den Stirnseiten der Längsträger 16 verbunden sind.

Für den Fall, dass für einen speziellen Einsatzzweck keine Rahmenanordnung, sondern lediglich die Anordnung eines oder mehrerer Längsträger 16 benötigt wird, können die stirnseitigen Führungsnuten auch zur Aufnahme weiterer Halterungen eingesetzt werden.

Figuren 3a bis 3d zeigen ein weiteres Ausführungsbeispiel, dessen Halterung 20 als separates, d.h. nicht in einen Längsträger 16 integriertes Teil ausgebildet ist.

Wie die Figuren 3a bis 3d zeigen, besteht die Halterung 20 aus einem Basiselement 21, das mit einer im Querschnitt halbkreisförmigen und an den Durchmesser der Stütze 5 angepassten Ausnehmung 22 ausgestattet ist.

An die Ausnehmung 22 schließt sich eine T-förmige Führungsnut 23 an, in die der in Figur 3e dargestellte Klemmkeil 17 eingeschoben werden kann.

Der Klemmkeil 17 besitzt keilförmig ausgebildete Flansche 24, die in die hinterschnittenen Bereiche der T-förmigen Führungsnut 23 eingreifen. Aufgrund der Keilform der Flansche erzeugt der Klemmkeil beim Einschieben in die T-förmige Führungsnut 23 eine Klemmkraft, durch die die Halterung 20 kraftschlüssig in der Stütze 5 fixiert wird.

Um neben dem Kraftschluss auch einen Formschluss zu erzielen, ist das Basiselement 21, wie aus Figur 3d erkennbar ist, mit Vorsprüngen 25 ausgestattet, die als zweite Einrastmittel wirken und in ihrer Form an die Einsenkungen 9 der ersten Einrastmittel 8 angepasst sind.

Aufgrund der beschriebenen, sowohl einen Form- als auch einen Kraftschluss bewirkenden Anordnung, ist die jeweilige Halterung absolut sicher und auch bei unsachgemäßer Krafteinwirkung statisch einwandfrei an der jeweiligen Stütze fixiert.

Das in Figur 2 dargestellte Ausführungsbeispiel besitzt im übrigen ebenfalls den Vorsprüngen 25 entsprechende Vorsprünge (nicht dargestellt), die in die entsprechenden Einsenkungen an der Stütze 5 formschlüssig eingreifen, so dass auch bei diesem Ausführungsbeispiel sowohl eine form- als auch eine kraftschlüssige Verbindung durch die Halterung 10 am Längsträger 16 gewährleistet ist.

## Patentansprüche

1. Transportwagen für Gegenstände, insbesondere Reinigungsutensilien, mit
- mindestens drei, vorzugsweise vier Rädern (1),
- einer von den Rädern getragenen Plattform (2),
- einem auf der Plattform aufgebauten Gestell,
- sowie von dem Gestell getragenen Halterungen (10, 20) für weitere Plattformen, Gerätschaften, Utensilien o.dgl., wobei
- die Plattform (2) als ebene Platte ausgebildet und mit einer Anzahl von in einem bestimmten Raster angeordneten Befestigungseinrichtungen (3) ausgestattet ist;
- das Gestell mindestens zwei vertikale Stützen (5) aufweist, die jeweils mit ihrem unteren Ende (4) an die Befestigungseinrichtungen (3) ankoppelbar sind;
- die Stützen (5) des Gestells jeweils mit in einem bestimmten Raster übereinander angeordneten ersten Einrastmitteln (8) ausgestattet sind; und
- die Halterungen (10, 20) an den Stützen verschiebbar angeordnet und mit zweiten Einrastmitteln ausgestattet sind, die formschlüssig mit den ersten Einrastmitteln zusammenwirken ;
**dadurch gekennzeichnet, dass**
die Halterungen (10, 20) als die Stützen umgreifende Klammerelemente ausgebildet sind.

2. Transportwagen nach Anspruch 1, **dadurch gekennzeichnet, dass** die Befestigungseinrichtungen (3) jeweils als Einsenkungen in der Plattform (2) ausgebildet sind, in die die unteren Enden (4) der Stützen (5) einsetzbar sind.

3. Transportwagen nach Anspruch 1, **dadurch gekennzeichnet, dass** die Befestigungseinrichtungen jeweils als über die Oberseite der Plattform (2) herausragender Kranz ausgebildet sind.

4. Transportwagen nach Anspruch 2 oder 3, **dadurch gekennzeichnet, dass** die Befestigungseinrichtungen (3) eine Durchgangsöffnung (7) umfassen, durch die von der Unterseite der Plattform her mindestens eine Befestigungsschraube einsetzbar ist, die mit ihrem zur Plattformoberseite hin gerichteten Ende jeweils in das untere Ende (4) der Stütze (5) einschraubbar ist.

5. Transportwagen nach Anspruch 1, **dadurch gekennzeichnet, dass** das Raster ein Gitterraster ist und die Mittelabstände der Befestigungseinrichtungen in Längs- und Querrichtung der Plattform gleich sind.

6. Transportwagen nach Anspruch 5, **dadurch gekennzeichnet, dass** sich das Raster nur über einen Teil der Fläche der Plattform erstreckt.

7. Transportwagen nach Anspruch 1, **dadurch gekennzeichnet, dass** jeweils zwei vertikale Stützen (5) des Gestells im Bereich ihres oberen Endes miteinander verbunden sind.

8. Transportwagen nach Anspruch 1, 2, 3, 4 oder 7, **dadurch gekennzeichnet, dass** die vertikalen Stützen (5) von Rohren gebildet sind.

9. Transportwagen nach Anspruch 8, **dadurch gekennzeichnet, dass** die ersten Einrastmittel (8) von in einem gleichen Abstand übereinander angeordneten Einsenkungen (9) gebildet sind.

10. Transportwagen nach Anspruch 9, **dadurch gekennzeichnet, dass** die ersten Einrastmittel von in gleichen Abständen übereinander angeordneten Vorsprüngen gebildet sind.

11. Transportwagen nach Anspruch 1, **dadurch gekennzeichnet, dass** die Klammerelemente mehrteilig ausgebildet sind.

12. Transportwagen nach Anspruch 11, **dadurch gekennzeichnet, dass** ein Teil des jeweiligen Klammerelementes als Klemmkeil (17) ausgebildet ist.

13. Transportwagen nach einem der vorhergehenden Ansprüche, **dadurch gekennzeichnet, dass** die Klammerelemente in Plattform- oder Rahmenelemente (16) integriert sind.

14. Transportwagen nach Anspruch 1, **dadurch gekennzeichnet, dass** die Klammerelemente mit den zweiten Einrastmitteln (25) ausgestattet sind.

15. Transportwagen nach Anspruch 14 sowie 9 oder 10, **dadurch gekennzeichnet, dass** die zweiten Einrastmittel als Vorsprünge bzw. Einsenkungen ausgebildet sind, die in die Vorsprünge bzw. Einsenkungen der Stützen einrastbar sind.

## Claims

1. Transport vehicle for objects, in particular cleaning utensils, having
- at least three, preferably four wheels (1),
- a platform (2) carried by the wheels,
- a frame mounted on the platform,
- as well as supports (10, 20) carried by the frame for further platforms, implements, utensils or the like, wherein
- the platform (2) is designed as a flat plate and equipped with a number of fastening devices (3) arranged in a certain pattern;
- the frame comprises at least two vertical posts (5) which in each case can be coupled by their lower end (4) to the fastening devices (3);
- the posts (5) of the frame are in each case equipped with first latch means (8) arranged one above the other in a certain pattern; and
- the supports (10, 20) are arranged slidably on the posts and equipped with second latch means which co-operate with the first latch means in form-locking relationship;
**characterised in that** the supports (10, 20) are designed as clamp elements encompassing the posts.

2. Transport vehicle according to claim 1, **characterised in that** the fastening devices (3) are in each case designed as indentations in the platform (2), in which can be inserted the lower ends (4) of the posts (5).

3. Transport vehicle according to claim 1, **characterised in that** the fastening devices are in each case designed as a rim protruding above the upper side of the platform (2).

4. Transport vehicle according to claim 2 or 3, **characterised in that** the fastening devices (3) include a through-hole (7) through which can be inserted, from the lower side of the platform, at least one fastening screw which with its end directed towards the upper side of the platform can in each case be screwed into the lower end (4) of the post (5).

5. Transport vehicle according to claim 1, **characterised in that** the pattern is a grid pattern and the centre-to-centre distances of the fastening devices in the longitudinal and transverse directions of the platform are the same.

6. Transport vehicle according to claim 5, **characterised in that** the pattern extends over only part of the surface of the platform.

7. Transport vehicle according to claim 1, **characterised in that** in each case two vertical posts (5) of the frame are connected to each other in the region of their upper end.

8. Transport vehicle according to claim 1, 2, 3, 4 or 7, **characterised in that** the vertical posts (5) are formed by tubes.

9. Transport vehicle according to claim 8, **characterised in that** the first latch means (8) are formed by indentations (9) arranged at the same distance one above the other.

10. Transport vehicle according to claim 9, **characterised in that** the first latch means are formed by projections arranged at equal distances one above the other.

11. Transport vehicle according to claim 1, **characterised in that** the clamp elements are constructed in several parts.

12. Transport vehicle according to claim 11, **characterised in that** a portion of the respective clamp element is designed as a clamping wedge (17).

13. Transport vehicle according to any of the preceding claims, **characterised in that** the clamp elements are integrated in platform or frame elements (16).

14. Transport vehicle according to claim 1, **characterised in that** the clamp elements are equipped with the second latch means (25).

15. Transport vehicle according to claim 14 as well as 9 or 10, **characterised in that** the second latch means are designed as projections or indentations which can be latched in the projections or indentations of the posts.

## Revendications

1. Chariot de transport pour objets, en particulier pour des ustensiles de nettoyage, comprenant
- au moins trois, de préférence quatre roues (1),
- une plate-forme (2) portée par les roues,
- un bâti monté sur la plate-forme,
- ainsi que des fixations (10, 20) portées par le bâti destinées à d'autres plate-formes, matériels, ustensiles, ou similaires, dans lequel
- la plate-forme (2) est réalisée sous forme de plaque plane et équipée d'un certain nombre de dispositifs de fixation (3) disposés dans une trame donnée ;
- le bâti présente au moins deux montants verticaux (5) qui peuvent être couplés respectivement avec leur extrémité inférieure (4) aux dispositifs de fixation (3) ;
- les montants (5) du bâti sont équipés respectivement de premiers moyens d'encliquetage (8) disposés les uns sur les autres dans une certaine trame ; et
- les fixations (10, 20) sont disposées de manière mobile sur les montants et sont équipées de deuxièmes moyens d'encliquetage, qui interagissent par correspondance de forme avec les premiers moyens d'encliquetage ;
**caractérisés en ce que**
les fixations (10, 20) sont réalisées sous forme d'agrafes enveloppant les montants.

2. Chariot de transport selon la revendication 1, **caractérisé en ce que** les dispositifs de fixation (3) sont réalisés respectivement sous forme de cavités dans la plate-forme (2), dans lesquelles les extrémités inférieures (4) des montants (5) peuvent être insérées.

3. Chariot de transport selon la revendication 1, **caractérisé en ce que** les dispositifs de fixation sont réalisés respectivement sous forme de couronne en saillie de la face supérieure de la plate-forme (2).

4. Chariot de transport selon la revendication 2 ou 3, **caractérisé en ce que** les dispositifs de fixation (3) comprennent une ouverture de passage (7), par laquelle au moins une vis de fixation peut être insérée depuis la face inférieure de la plate-forme, qui peut être vissée respectivement dans l'extrémité inférieure (4) du montant (5) avec son extrémité dirigée vers la face supérieure.

5. Chariot de transport selon la revendication 1, **caractérisé en ce que** la trame est une grille et que les distances moyennes des dispositifs de fixation dans le sens longitudinal et transversal de la plate-forme sont égales.

6. Chariot de transport selon la revendication 5, **caractérisé en ce que** la trame ne s'étend que sur une partie de la surface de la plate-forme.

7. Chariot de transport selon la revendication 1, **caractérisé en ce que** respectivement deux montants verticaux (5) du bâti sont reliés l'un à l'autre dans la zone de leur extrémité supérieure.

8. Chariot de transport selon la revendication 1, 2, 3, 4 ou 7, **caractérisé en ce que** les montants verticaux (5) sont formés de tubes.

9. Chariot de transport selon la revendication 8, **caractérisé en ce que** les premiers moyens d'encliquetage (8) sont formés par des cavités (9) superposées à distance égale.

10. Chariot de transport selon la revendication 9, **caractérisé en ce que** les premiers moyens d'encliquetage sont formés par des saillies superposées à distance égale.

11. Chariot de transport selon la revendication 1, **caractérisé en ce que** les agrafes sont réalisées en plusieurs pièces.

12. Chariot de transport selon la revendication 11, **caractérisé en ce qu'**une partie de l'agrafe respective est réalisée sous forme de coin de blocage (17).

13. Chariot de transport selon l'une quelconque des revendications précédentes, **caractérisé en ce que** les agrafes sont intégrées dans la plate-forme ou l'élément de cadre (16).

14. Chariot de transport selon la revendication 1, **caractérisé en ce que** les agrafes sont dotées de deuxièmes moyens d'encliquetage (25).

15. Chariot de transport selon la revendication 14 ainsi que 9 ou 10, **caractérisé en ce que** les deuxièmes moyens d'encliquetage sont réalisés sous forme de saillies et/ou cavités qui peuvent s'encliqueter dans les saillies et/ou cavités des montants.
